# EUROPEAN PATENT APPLICATION

(11) **EP 0 723 892 A2**
(43) Date of publication of application: **31.07.1996**
(21) Application number: 95120133.4
(22) Date of filing: 20.12.1995
(51) Int. Cl.: B60R 16/02

(54) **System in a vehicle, and a system for working the method**

(30) Priority: 21.12.1994 IT BO940561
(71) Applicant: MAGNETI MARELLI S.p.A., I-20145 Milano (IT)
(72) Inventor: Matteucci, Daniele, 40100 Bologna (IT); Bianchi, Sergio, 40011 Anzola dell'Emilia (IT)
(74) Representative: Jorio, Paolo

(57) **Abstract**

The method selects the configuration of a control system (2) in a vehicle and consists in:
generating a signal corresponding to an access code input by the user;
recognising the signal from among a number of admissible signals, each corresponding to a given configuration of the control system (2), and
- actuating the control system (2) so as to bring about the selected configuration.

## Description

The invention relates to a method of selecting the configuration of a control system in a vehicle.

The invention also relates to a system for working the above-mentioned method.

As is known, some devices in a vehicle, such as the engine, operate as required by the user. Basically, if the user wants the vehicle to travel at a certain speed, he simply presses the accelerator pedal without any limitation apart from the maximum rated speed of the vehicle. Now, however, the Italian Highway Code and regulations in other countries state that users below a certain age may not drive a vehicle at a speed above a fixed limit. This requirement, in the case of a large family, means that if the family only has high-power vehicles, the vehicles cannot be driven by users below the regulation age, or alternatively the family must buy a number of vehicles, some suitable for users below the regulation age and others usable by other members of the family. At present there is no system or method for selecting from among a number of vehicle speeds, irrespective of the wish of the user.

At present also, there is no method or system for selecting the means and devices installed in the vehicle, among the possible combinations of such devices. For example, manufacturers of vehicles provided with catalytic converters and vehicles without such components need to provide two different kinds of control systems, the first allowing for the presence of the catalytic converter and the second allowing for the absence of the catalytic converter. It is therefore necessary to provide two different assembly lines or a single assembly line in which, depending on the orders of purchase, a predetermined number of vehicles with a catalytic converter and control system for operating a catalytic converter are first assembled, followed by a predetermined number of vehicles without a catalytic converter and provided with a control system for operating the latter vehicles.

The aim of the present invention is to provide a method for selecting the configuration of a control system in a vehicle so as to obviate the aforementioned disadvantages.

Another aim of the present invention is to construct a device for selecting the configuration of a control system in a vehicle.

The present invention relates to a method of selecting the configuration of a control system in a vehicle, characterised in that it comprises:
generating a signal corresponding to an access code input by the user;
recognising the said signal from among a number of admissible signals, each corresponding to a given configuration of the said control system, and
- actuating the said control signal until it brings about the selected configuration.

The present invention also relates to a system for selecting the configuration of a control system in a vehicle, characterised in that it comprises:
at least one means for generating an electric signal in dependence on an access code input by the user;
a memory for storing a number of electric signals, each corresponding to one of the possible configurations of the said control system;
a first block adapted to recognise the said electric signal out of the number of electric signals stored in the said memory, and
a second unit for actuating the said control system so that this brings about the selected configuration.

The present invention will be more clearly understood from the following description of a preferred embodiment, by way of non-limitative example only, with reference to the accompanying drawings in which:
Fig. 1 is a block diagram of a system for selecting the configuration of a control system in a vehicle;
Fig. 2 is a diagram of an operating cycle of the system in Fig. 1;
Fig. 3 shows a first embodiment of a part of the system in Fig. 1;
Fig. 4 shows a second embodiment of the aforementioned part of the system in Fig. 1, and
Fig. 5 shows a third embodiment of the aforementioned part of the system in Fig. 1.

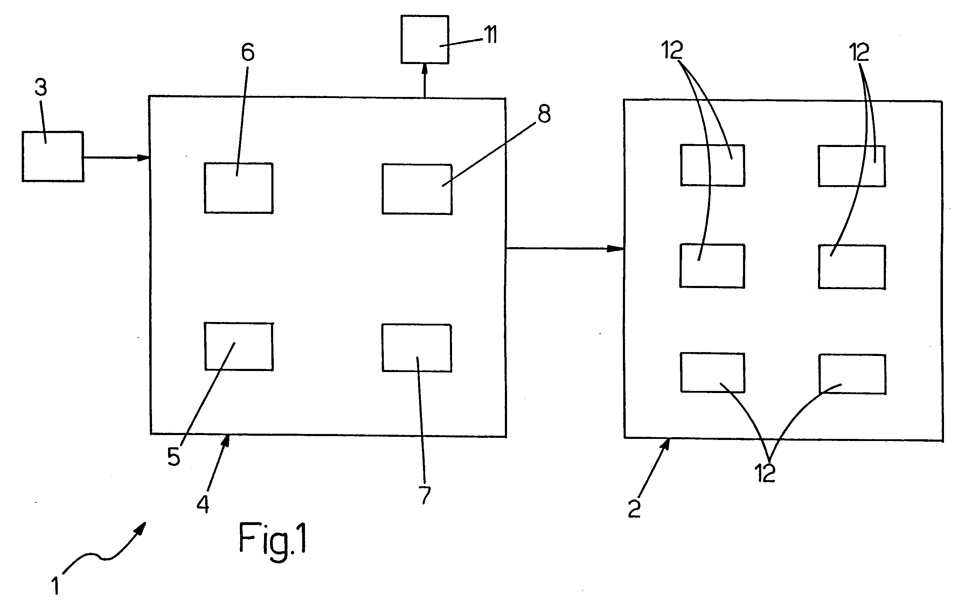

As shown in Fig. 1, the general reference 1 denotes a system for selecting the configuration of a control system 2 in a vehicle (not shown). The main feature of the system 1 is that it comprises one or more components, each capable of generating a respective electric signal corresponding to a given configuration of the control system 2, and means for recognising the electric signal and for actuating the system 2 so that it brings about the chosen configuration.

With reference to Fig. 1, the system 1 comprises:
at least one unit 3 which, when enabled, generates an electric signal, and
an exchange 4 which receives the aforementioned electric signal and comprises a unit 5 which recognises the incoming electric signal, a unit 6 for storing a number of electric signals, and a unit 7 which, in response to the recognised electric signal, generates an electric signal for supplying to the system 2.

The exchange 4 also comprises a unit 8 which records a number of events which occur in succession in the vehicle from the moment in which the unit 3 generates its specific electric signal. The exchange 4 is connected to a display means 11, preferably installed at or near the dashboard (not shown) of the vehicle and adapted to display the selected configuration or a symbol corresponding to the configuration, or parameters of the engine relating to the configuration.

With reference to Fig. 1, the control system 2 is substantially similar to the control system at present installed in vehicles and more particularly manufactured by the applicants. The only difference between the control system 2 and that manufactured at present is that the control system 2 stores a number of possible configurations diagrammatically indicated by units 12 in Fig. 1.

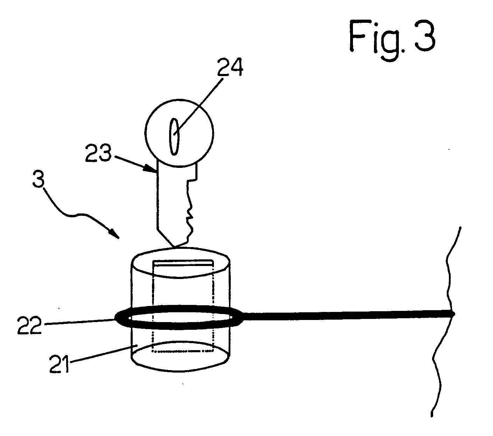

With reference to Fig. 3, the unit 3 comprises a barrel 21 connected (not shown) to the vehicle battery (not shown), and an antenna 22 adapted to transmit an electric signal to the unit 5 which, in this embodiment, comprises an electric component manufactured by the applicants and known in the art as an "immobiliser". In practice, the electric signal is transmitted by the antenna 22 to the unit 5 when a key 23 is inserted into the barrel 21, the key being provided with an electric component 24 in the form of a capsule sold by the applicants and known in the art as a "transponder". The part of the plant 1 just described is known and is used in an anti-theft system. In known manner, the transponder contains a circuit for receiving and transmitting energy and a logic circuit which stores a code which can take 2³² combinations, each transponder being manufactured with a code different from the codes in the other transponders. In operation, when the transponder is within the range of action of the antenna, i.e. when the key 23 is inserted into the barrel 21, the receiving and transmitting circuit in the transponder receives energy and actuates the aforementioned logic circuit, which transmits the aforementioned code in the form of an electromagnetic signal. The electromagnetic signal is converted by the antenna 22 into a digital electric signal, i.e. depending on the code transmitted by the transponder. If a number of keys 23 are provided, each with a respective means 24, each key 23 can be associated with a corresponding configuration of the control system 2. Of course, the key 23 is also used for actuating the ignition system (not shown) of the vehicle engine (not shown).

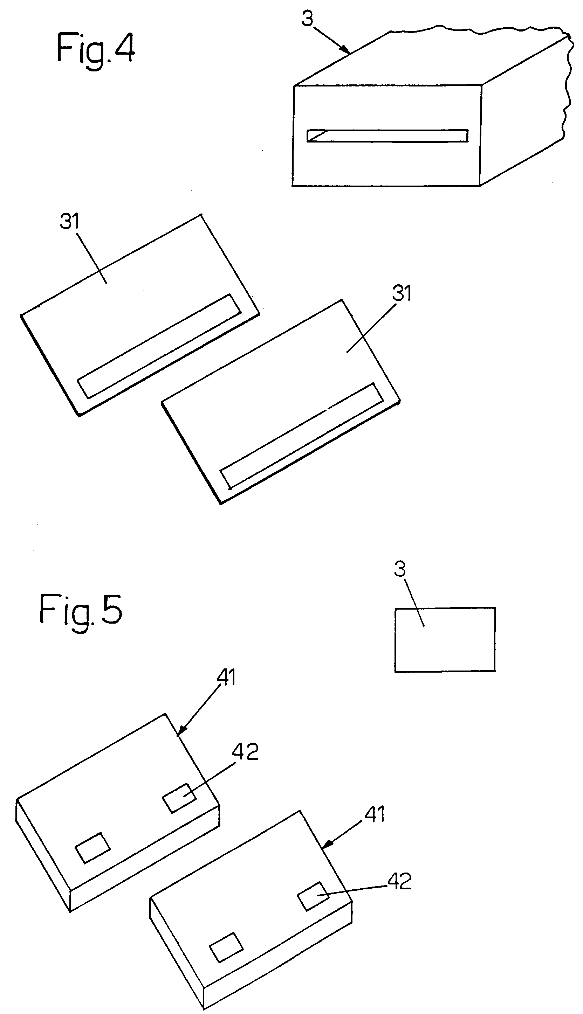

In Fig. 4, the unit 3 comprises a reader of a magnetic card 31 (of known kind, similar to credit cards) and a generator of an electric signal depending on the reading of the code stored in the card 31. If a number of magnetic cards 31 are each provided with a separate code, each card 31 can be associated with a corresponding configuration of the control system 2.

In Fig. 5, the unit 3 comprises a means for receiving signals at radio or other frequency generated by a radio control 41 identical to the radio controls in anti-theft systems. Each radio control 41 is adapted to generate a different signal from the signals of the other radio controls. In operation, when a button 42 is pressed, the radio control 41 generates a signal which is received by the unit 3 and in turn inputs a corresponding signal into the unit 5. In a first possible construction, the user can be provided with a number of radio controls 41 equal to the number of possible configurations, whereas in a second construction the user can be provided with a single radio control 41 adapted to generate a number of signals, each associated with a given configuration.

In the three variants of the unit 3 and the means actuating the unit 3 shown in Figs. 3, 4 and 5, the unit 3 and the unit 5 can form a single unit. These variants also contain an anti-theft system, since it is necessary for the signal supplied to the exchange 4 to be recognised as among those stored in the unit 6.

We shall now make a list of the possible configurations which can be selected in the control system 2. A first configuration consists in providing a given maximum speed for each user, the speed being different from the rated speed. Basically a choice can be made between two maximum speeds, one being the rated speed of the vehicle and the second being a maximum speed below the rated speed. To this end, one unit 12 can comprise a maximum speed limiter similar to that described in Italian Patent No. 1 182 509 issued on 5 October 1987 and filed by the Applicants on 12 July 1985 under the title: "A system for limiting the maximum speed of an internal combustion engine comprising an electronic injection system". Another method of limiting the maximum speed of the vehicle, applicable to vehicles provided with an automatic five-speed gear, is to provide a unit 12 for selecting only the first four gears and preventing use of the fifth gear. However, whenever the car is driven in a country where certain users (depending e.g. on age) cannot drive at a maximum speed above a limit defined by law, the users can be given a key 23 (or another equivalent means) associated with the aforementioned limitation of the maximum speed. In a variant of the method of limiting the speed by limiting the number of usable gears, only the first two gears can be selected. This is particularly useful when the vehicle is left in a car-park or garage in which the owner may need to move the vehicle. In this case the car-park owner will be given the key 23, or any equivalent means, associated with the latter configuration.

Other possible configurations can relate to the equipment of the vehicle, i.e. each form of equipment can be associated with a key 23 (or another equivalent means). For example, a first equipment could include a catalytic converter (not shown), a second equipment could be without a catalytic converter, a third equipment could include suspensions (not shown) with a predetermined performance, e.g. standard performance for "family" vehicles, and a fourth equipment could include suspensions with a different kind of performance, e.g. higher performance for sports cars. Another equipment could relate to the cylinder capacity of the engine, so that engines with different cylinder capacities can be installed in the same type of vehicle in a single assembly line, and if the control system 2 is for controlling devices in the vehicle in a manner depending on the cylinder capacity of the engine, after the engine has been installed the vehicle can be provided with an access code associated with the cylinder capacity of the installed engine.

Other configurations can relate to a combination of equipment from among that previously described, for example a configuration can be provided in which a maximum speed below the rated speed is set, together with equipment comprising a catalytic converter, or equipment in which the maximum rated speed is allowed without a catalytic converter being installed. Since the type of petrol on sale can vary from country to country (e.g. petrol at 95 RON in some countries and petrol at 92 RON in others), and since some devices in the control system 2 (e.g. the injection system, not shown) function in dependence on the type of petrol, it is possible to have a number of configurations equal to the number of types of petrol on sale. Accordingly, if the car is driven in a country with a certain type of petrol, the key 23 (or other equivalent means) associated with this type of petrol can be used, whereas when the car is in another country and is first filled with petrol, the key 23 associated with the type of petrol on sale in the latter country can be used.

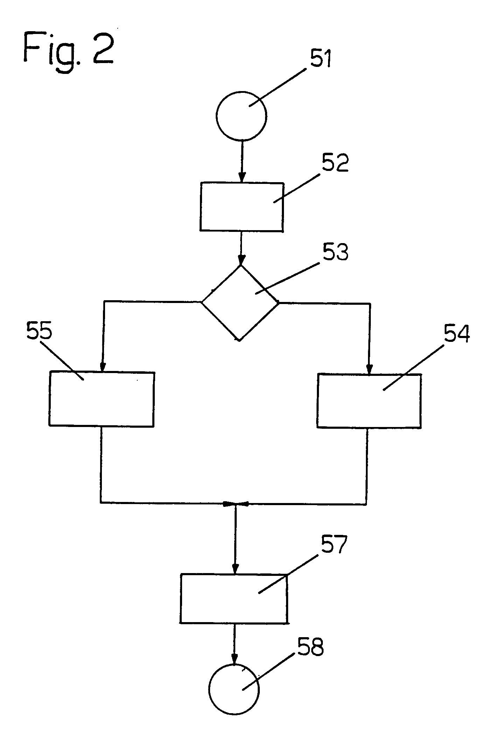

With reference to Fig. 2, there now follows a description of a working cycle of the exchange 4 for selecting between only two possible configurations of the control system 2. A starting unit 51 is followed by a unit 52 for enabling the unit 3 to generate an electric signal in dependence on the access code determined by the transponder in the case where the system 1 comprises the unit 3 illustrated in Fig. 3, or in dependence on a reading of the code stored in the magnetic card 31 in the case where the system 1 comprises the unit 3 illustrated in Fig. 4, or in dependence on the radio-frequency signal in the case where the system 1 comprises the unit 3 illustrated in Fig. 5. The unit 52 is followed by a unit 53 in which the electric signal generated by the unit 3 is recognised from among the admissible signals stored in the unit 6. If a first electric signal corresponds to a first configuration, a unit 54 downstream of unit 53, via unit 7, actuates the control system 2 so that it takes up the aforementioned first configuration. If a second electric signal corresponds to a second configuration, a unit 55 downstream of unit 53, via unit 7, actuates the control system 2 so that it takes up the aforementioned second configuration. Units 54 and 55 are followed by a unit 56 which causes unit 8 to record a number of events which occur in succession in the vehicle from the moment in which the unit 3 generates its electric signal and the display device 11 displays the selected configuration or a symbol corresponding to such configuration or engine parameters related to the configuration. In this manner, via the display device 11 or via a series connection with the unit 8 of the exchange 4, it is possible to identify the selected configuration and, in the case of users who are not allowed to drive at a maximum speed above a legal limit, it is possible to check whether the selected configuration is that stipulated by law for this type of user. Unit 57 is followed by an end-of-cycle unit 58.

If the control system 2 provides for more than two possible configurations, the number of access codes will be the same as the number of possible configurations, and in the cycle in Fig. 2 the unit 53 will be replaced by a number of units adapted to recognise the electric signal generated by the unit 3, and units 54 and 55 will be replaced by a number of units equal to the number of possible configurations.

The method according to the present invention consists in:
generating a signal corresponding to an access code to the system 1;
recognising the signal from among a number of admissible signals, each corresponding to a given configuration of the control system 2;
actuating the control system 2 so that it adopts the selected configuration;
recording a number of events which occur in succession in the vehicle from the moment in which the electric signal corresponding to an access code to the system 1 is generated, and
displaying on the display device 11 the selected configuration or a symbol corresponding to the configuration or engine parameters related to the selected configuration.

The preceding description clearly shows the advantages of the present invention.

More particularly, the control system 2 is adapted to store a number of possible configurations in order, via an access code, to select a configuration and control the operation of the vehicle and the apparatus therein on the basis of the selected configuration. If the configurations relate to the equipment on the vehicle, the vehicle manufacturer will install the same control system 2 in all vehicles, and can provide the purchaser of the vehicle with a number of access codes, based on the actual equipment of the vehicle or on the possibility of varying the type of equipment. For example, in the case where the vehicle is intended for the Turkish market, where a catalytic converter is not necessary, the Turkish purchaser will be provided with a given access code associated with equipment without a catalytic converter. In the case where the vehicle is intended for sale in a country where a catalytic converter has to be installed, a purchaser in such a country will be provided with a given access code associated with equipment including a catalytic converter. In the case where the vehicle is intended for a country where a certain type of petrol is on sale, the purchaser will be provided with a first access code associated with a configuration for the aforementioned kind of petrol and, on request, a second access code associated with a configuration for a different kind of petrol. In the case where the equipment includes installation of a certain kind of suspensions, the purchaser will be provided with a given access code associated with the kind of suspensions installed.

If the vehicle has automatic gears, the vehicle manufacturer can also provide the purchaser with an additional access code associated with a limitation to two of the automatic gears, for the purposes described above. If a family includes some users who can drive up to the maximum rated speed and other users who can drive up to a maximum speed below the rated speed, the latter users can use their own access code relating to the aforementioned limitation, whereas the other users can use an access code without any limitation. To sum up, the vehicle can be provided with a number of access codes equal to the number of configurations dictated by the cylinder capacity of the installed engine, the type of petrol, the type of equipment, the type of user, the market, the type of regulations in force in some countries, etc. This has advantages not only for the user, who can select different configurations on particular occasions, but also advantages (particularly flexibility in manufacture and assembly) for the vehicle manufacturer, who can install the same control system 2 in all vehicles irrespective of the user, the equipment, etc., with consequent reduction of costs.

Therefore it is clear that the method and the system 1 described and illustrated herein can be modified and varied without thereby departing from the protective scope of the present invention.

In particular, the exchange 4 or a part thereof can be incorporated in the control system 2. There can also be differences from the preceding description with regard to the size or configurations of the control system 2 which can be selected. The unit 3 can be replaced by a number of components, one for each possible access code, or the unit 3 can be replaced by an electromechanical means adapted to accept a number of keys of different shapes and such that insertion of a key will result in a variation in the electric state of a component, and consequently in generation of an electric signal corresponding to the variation in the electric state of the aforementioned component, which of course varies from key to key. Finally it is emphasised that the term "vehicle" is used for all means of locomotion provided with an internal combustion engine, such as cars, motor-cycles, etc.

## Claims

1. A method of selecting the configuration of a control system (2) in a vehicle, characterised in that it comprises:
generating a signal corresponding to an access code input by the user;
recognising the said signal from among a number of admissible signals, each corresponding to a given configuration of the said control system (2), and
actuating the control signal (2) so as to bring about the selected configuration.

2. A method according to claim 1, characterised in that it comprises a phase for registering a number of events which occur in succession in the vehicle, from the moment in which the said electric signal corresponding to the said access code is generated.

3. A method according to claim 1 and/or 2, characterised in that it comprises a phase for displaying the selected configuration and/or a symbol corresponding to the said configuration and/or engine parameters related to the selected configuration.

4. A method according to at least one of the preceding claims, characterised in that it comprises a configuration in which the control system (2) imposes a maximum speed below the maximum rated speed of the vehicle, so that the said control system (2) can perform its functions in a manner depending on the maximum imposed speed.

5. A method according to at least one of the preceding claims, characterised in that, in the case of vehicles provided with an automatic five-speed gear, the method comprises a phase of selection between a first configuration in which all gears are usable and a second configuration in which a limited number of the said gears are usable.

6. A method according to at least one of the preceding claims, characterised in that it comprises a configuration in which the control system (2) is informed about the type of suspensions installed in the vehicle, so that the said control system (2) can perform its functions in dependence on the type of suspensions.

7. A method according to at least one of the preceding claims, characterised in that it comprises a configuration in which the control system (2) is informed about the cylinder capacity of the engine installed in the vehicle so that the control system (2) can perform its functions in dependence on the cylinder capacity of the engine.

8. A method according to at least one of the preceding claims, characterised in that it comprises a configuration in which the control system (2) is informed about the kind of fuel used, so that the said control system (2) can perform its functions in dependence on the said kind of fuel.

9. A method according to at least one of the preceding claims, characterised in that it comprises a configuration in which the said control system (2) is informed that the vehicle is not equipped with a catalytic converter, so that the said control system (2) can perform its functions in a manner depending on the absence of the said catalytic converter.

10. A method according to at least one of claims 1 to 8, characterised in that it comprises a configuration in which the said control system (2) is informed that the vehicle is equipped with a catalytic converter, so that the said control system (2) can perform its functions in a manner depending on the presence of the said catalytic converter.

11. A system for selecting the configuration of a control system (2) in a vehicle, characterised in that it comprises:
at least one means (3) for generating an electric signal in dependence on an access code input by the user;
a memory (6) for storing a number of electric signals, each corresponding to one of the possible configurations of the control system (2);
a first unit (5) adapted to recognise the said electric signal out of the number of said electric signals stored in the said memory (6), and
a second unit (7) for actuating the said control system (2) so that the system brings about the selected configuration.

12. A system according to claim 11, characterised in that it comprises a third unit (8) for recording a number of events which occur in succession in the vehicle from the moment in which the said electric signal corresponding to the said access code is generated.

13. A system according to claim 11 and/or 12, characterised in that it comprises a fourth unit (11) for displaying the selected configuration and/or a symbol corresponding to such configuration and/or engine parameters relating to the selected configuration.

14. A system according to at least one of claims 11 to 13, characterised in that the said control system (2) comprises a configuration in which a maximum speed below the maximum rated speed of the vehicle is imposed, so that the said control system (2) can perform its functions in a manner depending on the imposed maximum speed.

15. A system according to at least one of claims 11 to 14, characterised in that the said control system (2), in the case of vehicles comprising automatic five-speed gears, comprises a first configuration in which all gears are usable and a second configuration in which a limited number of said gears are usable.

16. A system according to at least one of claims 11 to 15, characterised in that the said control system (2) comprises a configuration in which it performs its functions in a manner depending on the kind of suspensions installed in the vehicle.

17. A system according to at least one of claims 11 to 16, characterised in that the said control system (2) comprises a configuration in which it performs its functions in a manner depending on the cylinder capacity of an engine installed in the vehicle.

18. A system according to at least one of claims 11 to 17, characterised in that the said control system (2) comprises a configuration in which it performs its functions in a manner depending on the kind of fuel used.

19. A system according to at least one of claims 11 to 18, characterised in that the said control system (2) comprises a configuration in which it performs its functions in a manner depending on the absence of a catalytic converter.

20. A system according to at least one of claims 11 to 18, characterised in that the said control system (2) comprises a configuration in which it performs its functions in a manner depending on the presence of a catalytic converter.

21. A system according to any of claims 11 to 20, characterised in that the means (3) comprises a barrel (21) connected to a source of electric energy and an antenna (22) adapted to transmit an electric signal to the first unit (5); in operation the electric signal is transmitted by the said antenna (22) to the said first unit (5) when a key (23) is inserted into the said barrel (21), the key being provided with an electric device (24) containing a circuit for receiving and transmitting energy and a logic circuit which stores a code, so that when the said device (24) is within the range of action of the said antenna (22), i.e. when the said key (23) is inserted into the said barrel (21), the said receiving and transmitting circuit receives energy and actuates the said logic circuit, which transmits the cited code in the form of an electromagnetic signal which is converted by the said antenna (22) into a digital electric signal, i.e. depending on the code transmitted by the said device (24), the vehicle being provided with a number of keys (23) equal to the number of configurations present in the said control system (2).

22. A system according to any of claims 11 to 20, characterised in that the said means (3) comprises a reader of a magnetic card (31) and a generator of an electric signal depending on the reading of the code stored in the said card (31), the vehicle being provided with a number of cards (31) equal to the number of configurations present in the said control system (2).

23. A system according to any of claims 11 to 20, characterised in that the said means (3) comprises a means for receiving signals, preferably at radio frequency, generated by a radio control (41), the vehicle being provided with a number of radio controls (41) equal to the number of configurations present in the said control system (2).

24. A system according to any of claims 11 to 20, characterised in that the said means (3) comprises a means for receiving signals, preferably at radio frequency, generated by a radio control (41), the control being adapted to generate a number of signals equal to the number of configurations present in the said control system (2).
